# EUROPÄISCHE PATENTSCHRIFT

(11) **EP 2 691 247 B1**
(45) Veröffentlichungstag und Bekanntmachung des Hinweises auf die Patenterteilung: **27.05.2015**
(21) Anmeldenummer: 12705824.6
(22) Anmeldetag: 15.02.2012
(51) Int. Cl.: B60C 13/04, B60C 13/02, B60C 13/00

(54) **FAHRZEUGLUFTREIFEN**
VEHICLE PNEUMATIC TIRES
PNEUMATIQUE POUR VÉHICULE

(30) Priorität: 30.03.2011 DE 102011001657
(43) Veröffentlichungstag der Anmeldung: 05.02.2014
(73) Patentinhaber: Continental Reifen Deutschland GmbH, 30165 Hannover (DE)
(72) Erfinder: KIDNEY, Darren, 30900 Wedemark (DE); MOLZOW-VOIT, Frank, 27726 Worpswede (DE)
(74) Vertreter: Finger, Karsten
(86) Internationale Anmeldenummer: PCT/EP2012/052570
(87) Internationale Veröffentlichungsnummer: WO 2012/130520

(56) Entgegenhaltungen:
- EP-A1- 2 277 719
- EP-A2- 0 962 340
- JP-A- 2000 198 325
- US-A1- 2006 237 112

## Beschreibung

Die Erfindung betrifft einen Fahrzeugluftreifen mit einer nominellen Reifenquerschnittshöhe von maximal 100 mm, umfassend einen Laufstreifen, einen Gürtelverband und eine Radialkarkasse, welche Wulstkerne in Wulstbereichen von axial innen nach axial außen umläuft und bis unter den Gürtelverband reichend rückgeführt ist, ferner mit Seitenwandbereichen, welche jeweils aus drei Gummibauteilen, einem Winggummi, welcher sich vom Laufstreifen in Richtung Wulstbereich erstreckt, einem Seitenwandgummi und einem Felgenschutzgummi, welcher sich vom Wulstbereich in Richtung Winggummi erstreckt, gebildet sind.

Ein Fahrzeugluftreifen der eingangs genannten Art ist aus der EP-B-0 962 340 bekannt. Die Seitenwandbereiche des Reifens werden jeweils von drei Gummibauteilen gebildet, neben dem Winggummi und dem Felgenschutzgummi ist jeweils ein Seitenwandgummi vorgesehen, welcher sich vom Gürtelverband entlang der axialen Außenseite der Karkasse bis zu einer Schutzrippe erstreckt. Der vom Winggummi außenseitig überdeckte Seitenwandgummi verläuft bis in eine Position radial innerhalb des Laufstreifens und berührt die radiale Innenseite des Laufstreifens. Der Seitenwandgummi ist ferner derart ausgeführt und angeordnet, dass in einem Bereich, der zwischen 45 % und 70 % der Reifenquerschnittshöhe liegt, die Außenfläche des Reifens von folgenden Grenzlinien nicht geschnitten wird: der Grenzlinie zwischen dem Laufstreifen und dem Seitenwandgummi, der Grenzlinie zwischen dem Laufstreifen und dem Winggummi, der Grenzlinie zwischen dem Seitenwandgummi und dem Winggummi und der Grenzlinie zwischen dem Seitenwandgummi und dem Felgenschutzgummi. Durch eine derartige Anordnung dieser Gummibauteile in den Seitenwandbereichen des Reifens soll die Reifenhaltbarkeit deutlich verbessert werden, insbesondere soll die Spannung zwischen den Gummibauteilen derart gering gehalten werden, dass Trennungen, Risse und dergleichen an den Grenzen zwischen den verschiedenen Gummischichten wirksam verhindert werden.

Bei diesem bekannten Aufbau der Seitenwandbereiche sind bei der Herstellung des Reifens relativ dünne, extrudierte Rohgummiteile zu verwenden. Dies macht es schwierig, die Gummikomponenten mit hoher Extrusionsgeschwindigkeit herzustellen und es besteht die Gefahr, dass diese Teile während des Reifenaufbaus beschädigt werden. Sollten die Reifen besonders dünne Seitenwandbereiche aufweisen, kann eine gewisse Gesamtbauteildicke nicht unterschritten werden, da zwei Bauteile aufeinander positioniert werden müssen.

Aus der US 2006/237112 A ist ein Fahrzeugluftreifen bekannt, bei dem die Seitenwände aus zwei Lagen eines bei der Reifenherstellung spiralig gewickelten Mischungsstreifens aus einer unvulkanisierten Gummimischung hergestellt werden. Im fertigen Reifen erstrecken sich die Seitenwände bis zu den Felgenschutzgummis und überdecken diese im Stoßbereich außenseitig.

Der Erfindung liegt somit die Aufgabe zugrunde, einen Fahrzeugluftreifen der eingangs genannten Art derart auszuführen, dass er auch mit einer sehr geringen Dicke der Seitenwandbereiche herstellbar ist, ohne dass die Gefahr der Beschädigung der Rohgummiteile während des Reifenaufbaus besteht. Darüber hinaus soll es die Erfindung ermöglichen, die Bauteile mit hoher Extrusionsgeschwindigkeit herstellen zu können.

Gelöst wird die gestellte Aufgabe erfindungsgemäß dadurch, dass der Winggummi der einzige sich bis zum Laufstreifen erstreckende und im radial äußeren Teil des Seitenwandbereiches in Kontakt mit der Karkasse verlaufende Gummibauteil ist und mit seinem radial inneren Endabschnitt den in Richtung Wulstbereich anschließenden, streifenförmigen Seitenwandgummi überdeckt, welcher im überdeckten Bereich einen sich Richtung Laufstreifen verjüngenden Endabschnitt aufweist, dessen Ende sich in einem Abstand von einer Basislinie befindet, welcher zwischen 45 % und 70 % der von der Basislinie ermittelten Querschnittshöhe beträgt, wobei die Basislinie in axialer Richtung verläuft und jene Linie ist, welche an einer der jeweiligen Reifendimension entsprechenden Standardfelge das äußere Ende des Felgenradius berührt.

Bei einem erfindungsgemäß ausgeführten Fahrzeugluftreifen ist daher in den radial äußeren Bereichen der Seitenwandbereiche der Winggummi der einzige an den Laufstreifen anschließende Gummibauteil und somit dicker ausführbar als bei der bekannten Ausführung, bei welcher sich der Winggummi gemeinsam mit dem Seitenwandgummi den zur Verfügung stehenden Raum im Reifen teilt. Dieser einzelne voluminösere Winggummi lässt sich wesentlich einfacher und schneller extrudieren als der aus dem Stand der Technik bekannte dünne Winggummi. Der voluminösere Winggummi bietet ferner den Vorteil, während der Handhabung beim Aufbau des Reifens für Beschädigungen weniger anfällig zu sein. Mit Winggummis als einzige Gummibauteile in den radial äußeren Seitenwandbereichen lässt sich auch die Gummidicke in diesen Bereichen geringer halten. Bei Reifen mit einer Reifenquerschnittshöhe nahe 100 mm ist es *außerdem* vorteilhaft, wenn der an den Winggummi Richtung Wulstbereich anschließende Gummibauteil ein streifenförmiger Seitenwandgummi ist. Die Seitenwandbereiche umfassen daher drei Gummibauteile, deren Gummizusammensetzungen bezüglich ihrer physikalischen Eigenschaften entsprechend aufeinander abgestimmt werden können.

Für eine problemlose Herstellung der Seitenwandbereiche ist es vorteilhaft, wenn der Seitenwandgummi außenseitig von einem streifenförmigen Auslauf des Winggummis bedeckt ist. In diesem Fall werden die Außenflächen der Seitenwandbereiche hauptsächlich vom Winggummi und vom Felgenschutzgummi gebildet.

Bei einer anderen Ausführungsvariante der Erfindung mit jeweils drei Gummibauteilen in den Seitenwandbereichen bedeckt der Winggummi mit einem sich verjüngenden Endabschnitt den sich verjüngenden Endabschnitt des Seitenwandgummis, wobei sich das radial innere Ende des Winggummis in einem Abstand von der Basislinie befindet, welcher kleiner ist als der Abstand des radial äußeren Endes des sich verjüngenden Endabschnittes des Seitenwandgummis von der Basislinie und zwischen 40 % und 60 % der von der Basislinie ermittelten Querschnittshöhe beträgt. Bei dieser Ausführungsvariante nimmt auch der Seitenwandgummi einen gewissen Teil der Außenfläche der Seitenwandbereiche ein, was beispielsweise dann von Vorteil ist, wenn im Bereich des Seitenwandgummis eine Schutzrippe ausgebildet ist.

Weitere Merkmale, Vorteile und Einzelheiten der Erfindung werden nun anhand der Zeichnung, die schematisch einige Ausführungsbeispiele darstellt, näher beschrieben. Dabei zeigen

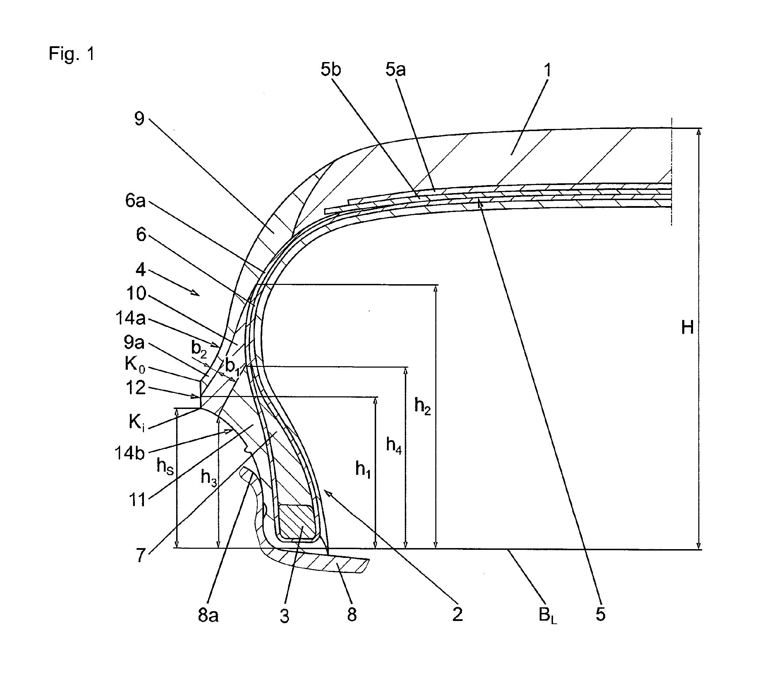

Fig. 1 bis Fig. 4 Querschnittansichten eines Fahrzeugluftreifens mit unterschiedlichen Ausführungsvarianten der Erfindung.

Die in der Beschreibung angegebenen Größen und Dimensionsangaben beziehen sich auf einen auf einer Standardfelge montierten Reifen unter Standardinnendruck, jedoch im unbelasteten Zustand, gemäß den ETRTO Standards in der derzeit geltenden Fassung. Die radialen Höhen, auf welche in der Beschreibung Bezug genommen wird, werden von einer Basislinie B_{L} aus ermittelt, welche in axialer Richtung verläuft und die Felge dort schneidet, wo sich das äußere Ende des Felgenradius befindet.

Die Figuren zeigen Schnittansichten eines Fahrzeugluftreifens in Radialbauart für Personenkraftwagen. Erfindungsgemäß ausgeführte Reifen weisen ein Querschnittverhältnis von höchstens 55 %, insbesondere höchstens 40 %, auf, die nominelle Reifenquerschnittshöhe beträgt maximal 100 mm.

Die in den Figuren dargestellten und auf einer angedeuteten Felge 8 mit Felgenhörnern 8a montierten Reifen weisen einen Laufstreifen 1, Wulstbereiche 2 mit Wulstkernen 3, zwei Seitenwandbereiche 4, einen Gürtelverband 5 und eine Radialkarkasse 6 auf. Die Seitenwandbereiche 4 erstrecken sich von den Reifenschultern - seitlich des Laufstreifens 1 - bis zu den Felgenhörnern 8a.

Der Laufstreifen 1, welcher nicht Gegenstand der Erfindung ist, kann in bekannter Weise ausgeführt bzw. aufgebaut sein, beispielsweise zweischichtig mit einer Laufstreifenbase und einer Laufstreifencap. Der Laufstreifen 1 ist ferner in bekannter und nicht gezeigter Weise mit einer Laufstreifenprofilierung versehen.

Die Radialkarkasse 6 besteht in bekannter Weise aus zumindest einer Lage aus gummierten Korden, welche zumindest im Wesentlichen in radialer Richtung verlaufen. Die jeweils von axial innen nach axial außen um die Wulstkerne 3 verlaufende Karkasse 6 reicht mit ihren umgeschlagenen Abschnitten 6a bis in den Bereich radial innerhalb des Gürtelverbandes 5. Dadurch ergeben sich Überlappungsbereiche zwischen den Abschnitten 6a der Karkasse 6 und dem Gürtelverband 5, welche in der Größenordnung von einigen Millimetern bis zu einigen Zentimetern betragen. Radial außerhalb der Wulstkerne 3 befindet sich, von der Karkasse 6 begrenzt, ein ein- oder mehrteiliges Kernprofil 7, welches aus einer oder mehreren Gummimischung(en) größerer Härte besteht.

Der Gürtelverband 5 weist beispielsweise zwei Gürtellagen 5a auf mit zueinander gekreuzt, aber in jeder Lage parallel verlaufenden Festigkeitsträgern, insbesondere aus Stahlkord. Die Gürtellagen 5a können mit einer nicht gezeigten Bandage bedeckt sein, welche in bekannter Weise aus in Gummi eingebetteten, im Wesentlichen in Umfangsrichtung verlaufenden Bandagenkorden, beispielsweise aus Nylon, besteht.

In den Seitenwandbereichen 4 sind bei den in Fig. 1, 2, 3 und 4 gezeigten Ausführungsformen drei Gummibauteile angeordnet. Bei den in Fig. 1, 2, 4 und 5 gezeigten Ausführungsvarianten gehören zu diesen Gummibauteilen ein Winggummi 9, 9', 9", 9"', ein Seitenwandgummi 10, 10', 10", 10'" und ein Felgenschutzgummi 11, 11', 11" 11'".

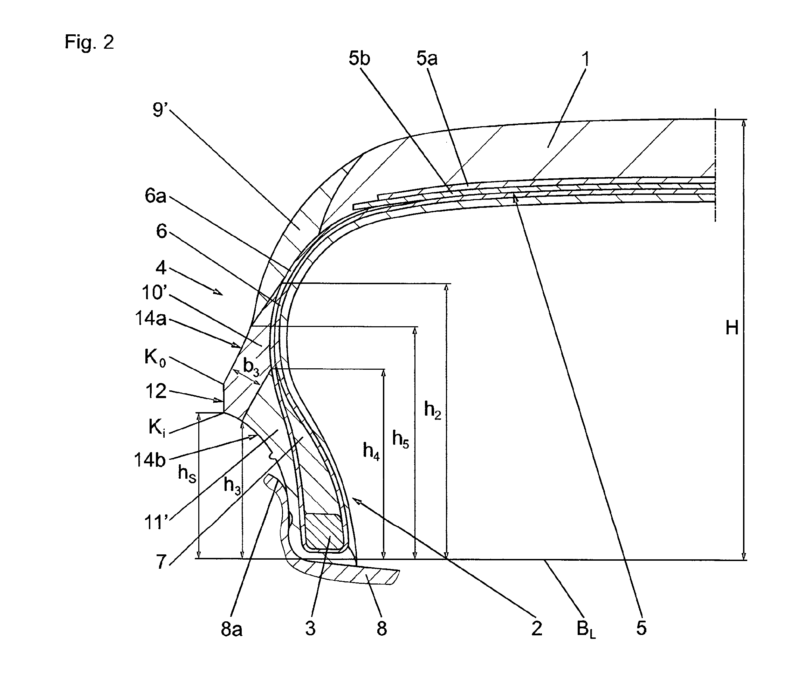

Diese Gummibauteile können in noch zu beschreibender Weise jeweils eine auf jeder Seite des Reifens axial über das Felgenhorn 8a der Felge 8 vorstehende Schutzrippe 12 (Fig.1 und Fig. 2) bilden. Die Schutzrippe 12 weist jeweils eine radial innere Kante K_{I} und eine radial äußere Kante K_{O} auf, deren gegenseitiger, in radialer Richtung gemessener Abstand 2 mm bis 6 mm beträgt. Die radial innere Kante K_{I} der Schutzrippe 12 befindet sich in einem Abstand hₛ von der Linie B_{L}, der zwischen 25 % und 45 % der ebenfalls von B_{L} gemessenen Querschnittshöhe H beträgt. Die Schutzrippe 12 ist jener Teil des Seitenwandbereiches 4 des Reifens, welcher die größte Dicke aufweist. Die größte Gummidicke im Bereich der Rippe 12 - senkrecht zur Karkasse 6 ermittelt - beträgt zwischen 8 mm und 12 mm. Von der radial äußeren Kante K_{O} und der radial inneren Kante K_{I} der Rippe 12 verlaufen vorzugsweise konkav gekrümmte Außenflächen 14a, 14b in Richtung Laufstreifen 1 und Felge 8. Es ist ferner grundsätzlich möglich, die Seitenwandbereiche 4 mit einer weitgehend konvex gekrümmten Außenkontur zu versehen, sodass die Gummidicke der Seitenwandbereiche 4 wenig variiert.

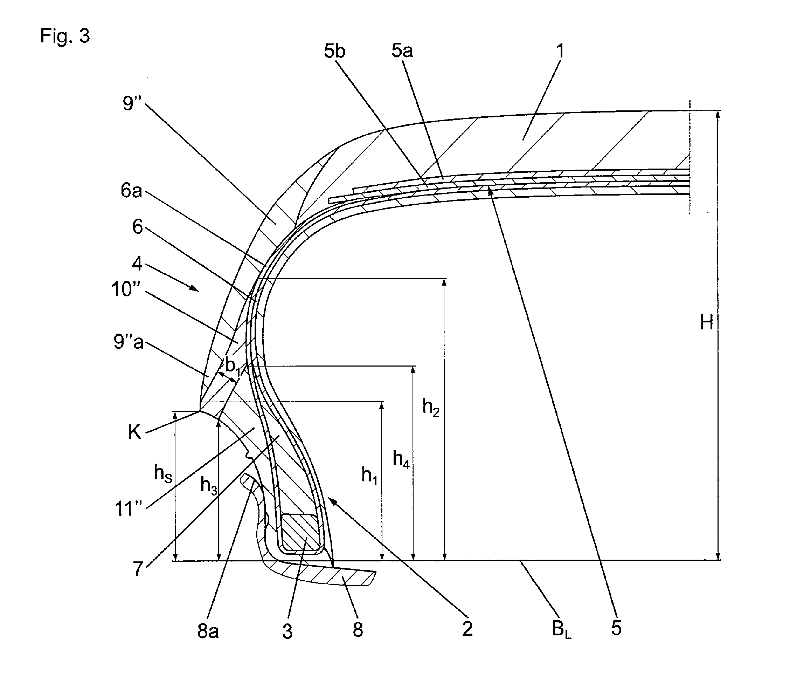

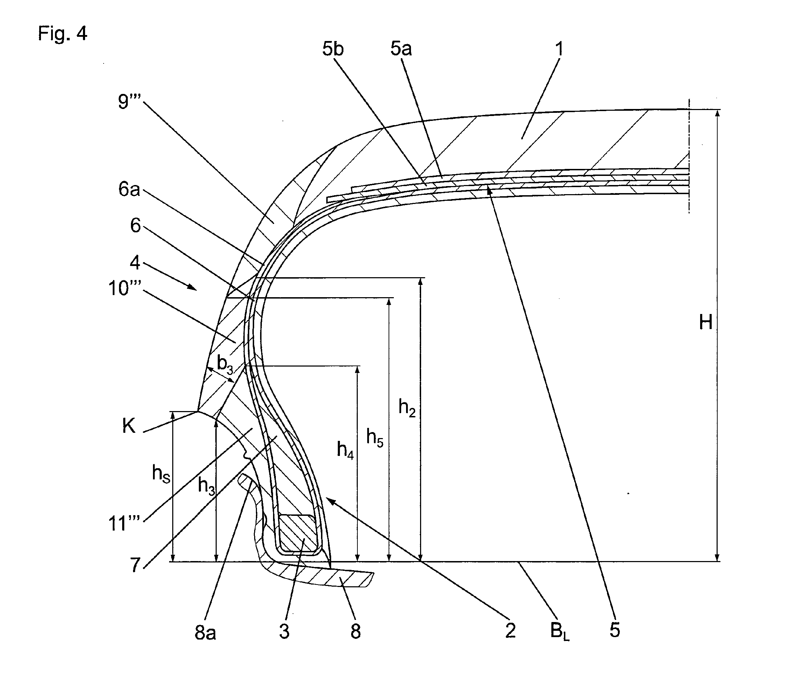

Bei den in Fig. 3 und 4 gezeigten Ausführungsvarianten ist keine derart ausgeprägte Schutzrippe vorhanden, der Seitenwandbereich 4 weist in dem erwähnten Abstand hₛ von der Basislinie B_{L} eine Kante K auf, bei welcher der Seitenwandbereich 4 seine größte Dicke aufweist.

Bei der in Fig. 1 gezeigten Ausführungsvariante erstreckt sich jeder Winggummi 9 über den Schulterbereich des Reifens, seitlich des Laufstreifens 1, bis in die Schutzrippe 12, in Kontakt mit dem Laufstreifen 1 und dem Abschnitt 6a der Karkasse 6. Entlang der Außenfläche 14a verläuft ein streifenförmiger Auslauf 9a des Winggummis 9, welcher den Seitenwandgummi 10 außenseitig bedeckt. Der Seitenwandgummi 10 verläuft etwa parallel zum Auslauf 9a als breiter Gummistreifen vom umgeschlagenen Abschnitt 6a der Karkasse 6 bis zur Außenseite der Schutzrippe 12. Der streifenförmige Auslauf 9a des Winggummis 9 bildet die radial äußere Kante K_{O}, der Seitenwandgummi 10 die radial innere Kante K_{I} der Schutzrippe 12. Das radial innere Ende des streifenförmigen Auslaufes 9a befindet sich in einem Abstand h₁ von der Linie B_{L}, welcher zwischen 30 % und 45 % der Höhe H beträgt. Der Felgenschutzgummi 11 schließt an den Seitenwandgummi 10 an und verläuft von diesem ausgehend kontinuierlich dünner werdend in den Wulstbereich 2 des Reifens und in Streifenform entlang der Kontaktfläche des Wulstbereiches 2 mit der Felge 8. Der radial äußere, sich verjüngende Endabschnitt des Seitenwandgummis 10 endet in einem Abstand h₂ von der Linie B_{L}, der zwischen 45 % und 70 % der Querschnittshöhe H beträgt, das radial innerste Ende des Seitenwandgummis 10 befindet sich in einem Abstand h₃ von der Linie B_{L}, der kleiner ist als h₁ und zwischen 20 % und 30 % der Querschnittshöhe H beträgt. In seinem Mittelabschnitt weist der Seitenwandgummi 10 eine Breite b₁ von 2 mm bis 4 mm auf, die Breite b₂ des Auslaufes 9a des Winggummis 9 beträgt 0,7 mm bis 1,3 mm. Das radial äußere Ende des Felgenschutzgummis 11 befindet sich in einem Abstand h₄ von der Linie B_{L}, der größer ist als h₁ und zwischen 30 % und 40 % der Querschnittshöhe H beträgt.

Bei der in Fig. 2 gezeigten Ausführungsform überdeckt der Winggummi 9 nur den sich verjüngenden Endabschnitt des Seitenwandgummis 10', welcher ansonsten im Wesentlichen die Schutzrippe 12 bildet und daher auch die beiden Kanten K_{I} und K_{O} der Schutzrippe 12 umfasst. Der im Wesentlichen als breiter Gummistreifen ausgeführte Seitenwandgummi 10' weist in seinem Mittelabschnitt eine Breite b₃ von 3 mm bis 5 mm auf, sein radial äußerer, sich verjüngender Endabschnitt endet im Abstand h₂ von der Basislinie B_{L}, welcher zwischen 45 % und 70 % der Querschnittshöhe H beträgt. Der sich verjüngende radial innere Endabschnitt des Winggummis 9 endet in einem Abstand h₅ von der Basislinie B_{L}, welcher zwischen 40 % und 60 % der Höhe H beträgt und kleiner ist als h₂. Die Anordnung und die Ausführung des Felgenschutzgummis 11' entsprechen der Anordnung und Ausführung des Felgenschutzgummis 11 der ersten Ausführungsform.

Die in den Fig. 3 und Fig. 4 dargestellten Ausführungsvarianten entsprechen im Wesentlichen jenen gemäß Fig. 1 und 2, wobei die Seitenwandbereiche 4 radial außerhalb der Stellen K eine konkav gekrümmte Außenkontur und radial innerhalb eine konvex gekrümmte Außenkontur aufweisen. Die in der nachfolgenden Beschreibung zitierten Abstände h₁ bis h₅ entsprechen den Abständen h₁ bis h₅ aus den Ausführungsvarianten gemäß den Figuren 1 bis 4 und weisen die bereits angegebenen Größen bzw. Größenverhältnisse auf. Analoges gilt für die Breiten b₁, b₂ und b₃.

Fig. 3 zeigt daher eine Ausführungsform, bei welcher der Winggummi 9" mit einem streifenförmigen Auslauf 9"a den Seitenwandgummi 10" überdeckt. Der im Wesentlichen zwischen dem Winggummi 9" und dem Felgenschutzgummi 11" als breiterer Streifen verlaufende Seitenwandgummi 10" endet mit seinem radial äußeren, sich verjüngenden Endabschnitt im Abstand h₂ von der Basislinie B_{L}, das radial innere Ende des Winggummis 9" befindet sich im Abstand h₁ von der Basislinie B_{L}. Bei der in Fig. 5 gezeigten Ausführung umfasst weiters der Seitenwandgummi 10" die Kante K. Die Anordnung und die Ausführung des Felgenschutzgummis 11" entsprichen im Wesentlichen jener der in Fig. 1 gezeigten Ausführungsform mit den Abständen h₃ und h₄ an den Grenzlinien zum Seitenwandgummi 10".

Fig. 4 zeigt eine Ausführungsvariante, bei welcher der Seitenwandgummi 10'" über einen größeren Bereich der konkav gekrümmten Außenfläche des Seitenwandbereiches 4 verläuft und ebenfalls die Kante K umfasst. Der Seitenwandgummi 10"' und der Winggummi 9"' überdecken einander mit sich verjüngenden Endabschnitten, derart, dass sich das radial äußere Ende des Seitenwandgummis 10'" im Abstand h₂ von der Basislinie B_{L} befindet und das radial innere Ende des Winggummis 9'" sich im Abstand h₅ von der Basislinie B_{L} befindet, wobei h₅ kleiner ist als h₂. Die Anordnung und die Ausführung des Felgenschutzgummis 11'" mit der durch die Abstände h₃ und h₄ bestimmten radialen Erstreckung entsprechen der Ausführungsform gemäß Fig. 5.

Der Winggummi 9, 9', 9", 9'" wird aus einer Gummimischung hergestellt, welche vorzugsweise eine gute Wetterbeständigkeit und eine gute Lichtbeständigkeit aufweist. Die Gummimischung für den Winggummi 9, 9', 9", 9'" basiert daher insbesondere auf EPDM, Naturkautschuk und Polybutadienkautschuk und kann eine der üblichen und bekannten Winggummimischungen sein.

Der Seitenwandgummi 10, 10', 10", 10'" besteht aus einer der üblichen und bekannten Seitenwandgummimischungen.

Für den Felgenschutzgummi 11, 11', 11 ", 11"' kommen Gummimischungen in Betracht, welche einen vergleichsweise hohen Abriebswiderstand aufweisen und eine vergleichsweise hohe Härte besitzen. In Frage kommen die bekannten und üblichen Felgenschutzgummimischungen.

### Bezugsziffernliste

1 Laufstreifen
2 Wulstbereich
3 Wulstkern
4 Seitenwandbereich
5 Gürtelverband
5a Gürtellage
6 Radialkarkasse
6a umgeschlagener Abschnitt
7 Kernprofil
8 Felge
8a Felgenkern
9, 9', 9", 9"' Winggummi
9a, 9"a Winggummistreifen
10, 10' Seitenwandgummi
10", 10"' Seitenwandgummi
11, 11' Felgenschutzgummi
11 ", 11"' Felgenschutzgummi
12 Schutzrippe
14a, 14 b konkave Außenkontur
K_{I} innere Kante
Ko äußere Kante
K Kante
H Querschnittshöhe
h₁ Abstand
h₂ Abstand
h₃ Abstand
h₄ Abstand
h₅ Abstand
b₁ Breite
b₂ Breite
b₃ Breite
B_{L} Basislinie

## Patentansprüche

1. Fahrzeugluftreifen mit einer nominellen Reifenquerschnittshöhe (H) von maximal 100 mm, umfassend einen Laufstreifen (1), einen Gürtelverband (5) und eine Radialkarkasse (6), welche Wulstkerne (3) in Wulstbereichen (2) von axial innen nach axial außen umläuft und bis unter den Gürtelverband (5) reichend rückgeführt ist, ferner mit Seitenwandbereichen (4), welche von *drei* Gummibauteilen gebildet sind, einem Winggummi (9, 9', 9", 9"'), welcher sich von seitlich des Laufstreifens (1) in Richtung Wulstbereich (2) erstreckt, *einem Seitenwandgummi (10, 10', 10", 10"')* und einem Felgenschutzgummi (11, 11', 11", 11"'), welcher sich vom Wulstbereich (2) in Richtung Winggummi (9, 9', 9", 9"') erstreckt, **dadurch gekennzeichnet,**
**dass** der Winggummi (9, 9', 9", 9'") der einzige sich bis zum Laufstreifen (1) erstreckende und im radial äußeren Teil des Seitenwandbereiches (4) in Kontakt mit der Karkasse (6) verlaufende Gummibauteil ist und mit seinem radial inneren Endabschnitt *den in Richtung Wulstbereich (2) anschließenden, streifenförmigen Seitenwandgummi (10, 10', 10", 10"') überdeckt,* welcher im überdeckten Bereich einen sich Richtung Laufstreifen (1) verjüngenden Endabschnitt aufweist, dessen Ende sich in einem Abstand (h₂) von einer Basislinie (B_{L}) befindet, welcher zwischen 45 % und 70 % der von der Basislinie (B_{L}) ermittelten Querschnittshöhe (H) beträgt, wobei die Basislinie (B_{L}) in axialer Richtung verläuft und jene Linie ist, welche an einer der jeweiligen Reifendimension entsprechenden Standardfelge (8) das äußere Ende des Felgenradius berührt.

2. Fahrzeugluftreifen nach Anspruch 1, **dadurch gekennzeichnet, dass** der Seitenwandgummi (10, 10") außenseitig von einem streifenförmigen Auslauf (9a, 9"a) des Winggummis (9, 9") bedeckt ist.

3. Fahrzeugluftreifen nach Anspruch 1, **dadurch gekennzeichnet, dass** der Winggummi (9', 9"') mit einem sich verjüngenden Endabschnitt den sich verjüngenden Endabschnitt des Seitenwandgummis (10', 10"') bedeckt, wobei sich das radial innere Ende des Winggummis (9', 9"') in einem Abstand (h₅) von der Basislinie (B_{L}) befindet, welcher kleiner ist als der Abstand (h₂) des radial äußeren Endes des sich verjüngenden Endabschnittes des Seitenwandgummis (10', 10"') von der Basislinie (B_{L}) und zwischen 40 % und 60 % der von der Basislinie (B_{L}) ermittelten Querschnittshöhe (H) beträgt.

4. Fahrzeugluftreifen nach einem der Ansprüche 1 bis 3, **dadurch gekennzeichnet, dass** der Seitenwandgummi (10, 10', 10", 10"') in seinem Mittelabschnitt eine Breite (b₁, b₃) aufweist, die zwischen 2 mm und 5 mm beträgt.

## Claims

1. Pneumatic vehicle tyre with a maximum nominal tyre cross-sectional height (H) of 100 mm, comprising a tread (1), a ply structure (5) and a radial carcass (6), which, from axially inside to axially outside, extends around bead cores (3) in bead regions (2) and is made to extend back under the ply structure (5), and also with sidewall regions (4), which are formed by three rubber components, a wing rubber (9, 9', 9'', 9'''), which extends from laterally of the tread (1) in the direction of the bead region (2), a *sidewall rubber (10, 10', 10'', 10''')* and a rim protection rubber (11, 11', 11'', 11'''), which extends from the bead region (2) in the direction of the wing rubber (9, 9', 9'', 9'''), **characterized**
**in that** the wing rubber (9, 9', 9'', 9''') is the only rubber component extending up to the tread (1) and running in contact with the carcass (6) in the radially outer part of the sidewall region (4) and it covers with its radially inner end portion the *strip-shaped sidewall rubber (10, 10', 10'', 10''') adjoining in the direction of the bead region (2),* which in the covered region has an end portion which narrows in the direction of the tread (1) and the end of which is at a distance (h₂) from a base-line (B_{L}) that is between 45% and 70% of the cross-sectional height (H) determined from the baseline (B_{L}), the baseline (B_{L}) running in the axial direction and being the line that is in contact with the outer end of the rim radius on a standard rim (8) corresponding to the respective tyre size.

2. Pneumatic vehicle tyre according to Claim 1, **characterized in that** the sidewall rubber (10, 10'') is covered on the outside by a strip-shaped extension (9a, 9''a) of the wing rubber (9, 9'').

3. Pneumatic vehicle tyre according to Claim 1, **characterized in that** the wing rubber (9', 9''') covers with a narrowing end portion of the narrowing end portion of the sidewall rubber (10', 10'''), the radially inner end of the wing rubber (9', 9''') being at a distance (h₅) from the baseline (B_{L}) that is less than the distance (h₂) of the radially outer end of the narrowing end portion of the sidewall rubber (10', 10''') from the baseline (B_{L}) and being between 40% and 60% of the cross-sectional height (H) determined from the baseline (B_{L}).

4. Pneumatic vehicle tyre according to one of Claims 1 to 3, **characterized in that**, in its middle portion, the sidewall rubber (10, 10', 10'', 10''') has a width (b₁, b₃) that is between 2 mm and 5 mm.

## Revendications

1. Bandage pneumatique pour roue de véhicule doté d'une hauteur nominale (H) de section transversale du bandage pneumatique d'au plus 100 mm, comprenant une bande de roulement (1), un ensemble de ceinture (5) et une carcasse radiale (6) qui entoure axialement de l'intérieur vers l'extérieur des âmes (3) de bourrelet dans des zones (2) de bourrelet et qui est rabattue jusqu'en dessous de l'ensemble de ceinture (5), en outre dotée de zones (4) de paroi latérale qui sont formées de *trois* composants de caoutchouc, à savoir un caoutchouc d'aile (9, 9', 9'', 9''') qui s'étend en direction de la zone de bourrelet (2) sur le côté de la bande de roulement (1), un *caoutchouc (10, 10', 10'', 10''')* de *paroi latérale* et un caoutchouc (11, 11', 11'', 11''') de protection de jante qui s'étend en direction du caoutchouc d'aile (9, 9', 9'', 9''') depuis la zone de bourrelet (2),
**caractérisé en ce que**
le caoutchouc d'aile (9, 9', 9'', 9''') est le seul composant de caoutchouc qui s'étend jusqu'à la bande de roulement (1) et en contact avec la carcasse (6) dans la partie radialement extérieure de la zone (4) de paroi latérale et *recouvre* par sa partie d'extrémité radialement intérieure *le caoutchouc (10, 10', 10'', 10''') de paroi latérale en forme de ruban adjacent en direction de la zone de bourrelet (2),* qui présente dans la partie recouverte une partie d'extrémité qui se rétrécit en direction de la bande de roulement (1) et dont l'extrémité est située à une distance (h₂) d'une ligne de base (B_{L}) qui représente entre 45 % et 70 % de la hauteur (H) de section transversale déterminée depuis la ligne de base (B_{L}), la ligne de base (B_{L}) s'étendant dans la direction axiale et étant la ligne en contact avec l'extrémité extérieure du rayon de jante sur une jante standard (8) qui correspond à la dimension particulière du bandage de roue.

2. Bandage pneumatique pour roue de véhicule selon la revendication 1, **caractérisé en ce que** le caoutchouc (10, 10'') de paroi latérale est recouvert du côté extérieur par un prolongement (9a, 9''a) en forme de ruban du caoutchouc d'aile (9, 9'').

3. Bandage pneumatique pour roue de véhicule selon la revendication 1, **caractérisé en ce que** le caoutchouc d'aile (9', 9''') recouvre par une partie d'extrémité se rétrécissant la partie d'extrémité se rétrécissant du caoutchouc (10', 10''') de paroi latérale, l'extrémité radialement intérieure du caoutchouc d'aile (9', 9''') étant située à une distance (h₅) de la ligne de base (B_{L}) plus petite que la distance (h₂) entre l'extrémité radialement extérieure de la partie d'extrémité se rétrécissant du caoutchouc (10', 10''') de paroi latérale de la ligne de base (B_{L}) et représentant entre 40 % et 60 % de la hauteur (H) de la section transversale déterminée à partir de la ligne de base (B_{L}).

4. Bandage pneumatique pour roue de véhicule selon l'une des revendications 1 à 3, **caractérisé en ce que** le caoutchouc (10, 10', 10'', 10''') de paroi latérale présente dans sa partie centrale une largeur (b₁, b₃) comprise entre 2 mm et 5 mm.
